# EUROPEAN PATENT SPECIFICATION

(11) **EP 4 386 548 B1**
(45) Date of publication and mention of the grant of the patent: **25.06.2025**
(21) Application number: 22863312.9
(22) Date of filing: 26.08.2022
(51) Int. Cl.: G06F 9/50, G06F 12/14, G06F 12/1027, G06F 9/48

(54) **RESOURCE MANAGEMENT METHOD AND CORRESPONDING DEVICE**
RESSOURCENVERWALTUNGSVERFAHREN UND ENTSPRECHENDE VORRICHTUNG
PROCÉDÉ DE GESTION DE RESSOURCES ET DISPOSITIF CORRESPONDANT

(30) Priority: 31.08.2021 CN 202111015561
(43) Date of publication of application: 19.06.2024
(73) Proprietor: Huawei Technologies Co., Ltd., Shenzhen, Guangdong 518129 (CN)
(72) Inventor: YE, Yunfeng, Shenzhen, Guangdong 518129 (CN); HE, Wenliang, Shenzhen, Guangdong 518129 (CN)
(74) Representative: Gill Jennings & Every LLP
(86) International application number: PCT/CN2022/114995
(87) International publication number: WO 2023/030174

(56) References cited:
- CN-A- 103 777 925
- CN-A- 105 874 432
- US-A1- 2017 177 500
- US-A1- 2019 361 728

## Description

### TECHNICAL FIELD

This application relates to the field of computer technologies, and specifically, to a resource management method and a corresponding apparatus.

### BACKGROUND

In a computer system, an address space identifier (ASID) is allocated to each newly generated process, to distinguish an independent virtual address space of each process. In addition, a translation lookaside buffer (TLB) also caches an ASID of the process and an entry of the ASID in the TLB. In this way, when the process is run subsequently, a corresponding TLB entry (TLB entry) may be queried in the TLB based on the ASID of the process, to quickly determine a corresponding physical address based on the TLB entry. If the TLB is frequently refreshed, when the foregoing process is run again, there is a high probability that a corresponding TLB entry cannot be quickly found in the TLB, resulting in a high TLB miss (TLB miss), and affecting performance of the computer system.

A computer system usually runs a common service and a latency-sensitive critical service. To ensure running of the critical service, a central processing unit (CPU) of the computer system is generally divided into a non-isolated CPU core and an isolated CPU core by using an isolation technology. Non-isolated CPU cores are used to run common service processes, and isolated CPU cores are used to run critical service processes. Both common service processes and critical service processes apply for ASIDs from a global ASID resource pool. There are many common service processes, but a quantity of ASIDs in the global ASID resource pool is limited. After the ASIDs in the global ASID resource pool are exhausted by common service processes, generation (generation) iteration of the global ASID resource pool is performed. Generation iteration means that the ASID is repeatedly used by updating a generation number of the ASID, so that subsequent processes can have available ASIDs. During iteration of the global ASID resource pool, to avoid ASID conflicts of different generations after iteration, the TLB in each CPU needs to be refreshed to invalidate ASIDs of a previous generation in the TLB.

Because the global ASID resource pool is frequently iterated, the TLB in the isolated core is frequently refreshed. As a result, there is a high probability that the TLB miss (TLB miss) occurs on the processes run by the isolated core, increasing a latency of a critical service run by the isolated CPU core.
US 2017/0177500 A1 discloses an apparatus and method for sub-page extended page table protection. For example, one embodiment of an apparatus comprises: a page miss handler to perform a page walk using a guest physical address (GPA) and to detect whether a page identified with the GPA is mapped with sub-page permissions; a sub-page control storage to store at least one GPA and other data related to a sub-page; the page miss handler to determine whether the GPA is programmed in the sub-page control storage; and the page miss handler to send a translation to a translation lookaside buffer (TLB) with a sub-page protection indication set to cause a matching of the sub-page control storage when an access matches a TLB entry with sub-page protection indication.

### SUMMARY

The invention is set out in the appended independent claims. Advantageous embodiments are defined by the appended dependent claims. This application provides a resource management method, used to manage an address space identifier (ASID), to reduce a latency of a critical service run by an isolated central processing unit (CPU) core. This application further provides a corresponding apparatus, a computer device, a computer-readable storage medium, a computer program product, and the like.

A first aspect of this application provides a resource management method. The method is applied to a computer system. The computer system includes a first processor core and a second processor core that is in an isolated environment. The method includes: allocating first ASIDs from an address space identifier ASID resource pool to processes run by the first processor core, where the ASID resource pool includes a plurality of first ASIDs; allocating a second ASID to a process run by the second processor core; and when the first ASIDs in the ASID resource pool are exhausted, updating only the first ASIDs in the ASID resource pool in an ASID generation iteration manner, invalidating the first ASIDs allocated to the processes run by the first processor core, and refreshing a translation lookaside buffer TLB in the first processor core.

In this application, both the first processor core and the second processor core are CPU cores. "Being in an isolated environment" may refer to software isolation. A process scheduling policy may be set by using an isolation technology, so that the first processor core runs a process of a common service when working, and the second processor core runs a process of a latency-sensitive critical service when working. There may be one or more first processor cores, and there may also be one or more second processor cores. "A plurality of" in this application means two or more than two.

In this application, a process run by the first processor core may be referred to as a process of a common service, and a process run by the second processor core may be referred to as a process of a critical service.

In this application, the first ASID and the second ASID may be located in a global ASID resource pool, or may be located in two different ASID resource pools. The first ASID refers to an ASID allocated to a process of a common service, and the second ASID refers to an ASID allocated to a process of a critical service. There are a plurality of first ASIDs, and each first ASID is different. There may be one or more second ASIDs, and each second ASID is different. In addition, the first ASID is different from the second ASID.

In this application, ASIDs in a computer system are usually a series of indexes, a quantity of ASIDs is usually limited, and processes in the computer system are infinite. Therefore, after the ASIDs in the resource pool are exhausted, generation (generation) iteration of the ASIDs needs to be performed to update the ASIDs in the resource pool. Generation iteration refers to the reuse of ASIDs in the resource pool by changing a generation identifier (GEN ID). To avoid ASID conflicts of different generations, after generation iteration occurs, the computer system invalidates an ASID that is of a previous generation and that is allocated to a process before generation iteration, and refreshes a translation lookaside buffer (TLB) in a corresponding processor core, to avoid that a same ASID corresponds to two different TLB entries (TLB entry) in the TLB, thereby causing a physical address access error.

In the first aspect, after the first ASIDs in the resource pool are exhausted, only the first ASIDs allocated to the processes run by the first processor core are updated, and the second ASID allocated to the process run by the second processor core is not updated, and only the TLB in the first processor core is refreshed, but the TLB in the second processor core is not refreshed. In this way, the TLB in the second processor core stores the TLB entry of the process of the critical service. When the process of the critical service needs to access a corresponding physical address, the corresponding physical address may be directly found by querying the TLB in the second processor core, and the corresponding physical address does not need to be searched for by using a page table, thereby accelerating an access speed of the physical address and reducing a latency of the critical service.

In a possible implementation of the first aspect, the foregoing step of allocating a second ASID to a process run by a second processor core includes: allocating the second ASID from another ASID resource pool to the process run by the second processor core, where the another ASID resource pool includes a plurality of second ASIDs.

In this possible implementation, the computer system may include two ASID resource pools. One resource pool includes first ASIDs, to provide ASIDs for processes of common services. The other ASID resource pool includes second ASIDs. ASIDs in the two resource pools are different. For example, the computer system has 60000 ASIDs, and index sequence numbers are from 00001 to 60000. An ASID resource pool 1 may include ASIDs from 00001 to 55000, and an ASID resource pool 2 may include ASIDs from 55001 to 60000. When there are two ASID resource pools, the resource pool including the second ASIDs includes a plurality of second ASIDs. Because processes of critical services are much less than processes of common services, the second ASIDs are consumed slowly. Even if the first ASIDs are consumed quickly, because generation iteration occurs, the second ASIDs are not affected. Without generation iteration for the second ASID, the TLB in the second processor core does not need to be refreshed. In this way, the TLB in the second processor core stores TLB entries of processes of critical services. When the process of the critical service needs to access a corresponding physical address, the corresponding physical address may be directly found by querying the TLB in the second processor core, and the corresponding physical address does not need to be searched for by using a page table, thereby accelerating an access speed of the physical address and reducing a latency of the critical service.

In a possible implementation of the first aspect, the foregoing step of allocating a second ASID to a process run by a second processor core includes: allocating the second ASID from the ASID resource pool to the process run by the second processor core, where the ASID resource pool includes at least one second ASID; and storing reservation information of the allocated second ASID, where the reservation information indicates that the allocated second ASID is reserved.

The foregoing step of updating the first ASIDs in the ASID resource pool in an ASID generation iteration manner includes: determining the first ASIDs in the ASID resource pool based on the reservation information of the allocated second ASID, and updating the first ASIDs in the ASID generation iteration manner.

In this possible implementation, the first ASID and the second ASID are located in a same ASID resource pool, and the ASID resource pool may also be referred to as a global ASID resource pool. When ASIDs are allocated to a process run by the first processor core and a process run by the second processor core, the ASIDs are extracted from the global ASID resource pool, and reservation information is stored only for the ASID allocated to the process run by the second processor core, where the reservation information indicates that the ASID allocated to the process run by the second processor core is reserved. For example, there are 60000 ASIDs in the global ASID resource pool, and index sequence numbers are from 00001 to 60000. If 00111 is allocated to a process run by the second processor core, reservation information reserved for 00111 is stored. In this way, when the first ASIDs are updated, only the ASIDs allocated to the processes run by the first processor core may be updated from all ASIDs in the global ASID resource pool based on the reservation information, but the ASID allocated to the process run by the second processor core is not updated. In this way, the global ASIDs do not need to be divided, which is more conducive to improving utilization of the ASID.

In a possible implementation of the first aspect, the step of storing reservation information of the allocated second ASID, where the reservation information indicates that the allocated second ASID is reserved includes: modifying, from an unreserved state to a reserved state in a reservation bitmap, an identifier in an identifier bit corresponding to the allocated second ASID, where the reservation bitmap is used to record a reservation status of each ASID in the ASID resource pool.

In this application, the reservation information of the allocated second ASID may be stored by using the reservation bitmap. The identifier bit may be a bit, and the reservation bitmap indicates a reservation status of the ASID in a form of a bit. A quantity of bits in the reservation bitmap is equal to a quantity of ASIDs in the global ASID resource pool. For example, if the computer system has 60000 ASIDs, there are 60000 bits in the reserved bitmap. The 60000 ASIDs are in a one-to-one correspondence with the 60000 bits, and each bit corresponds to one ASID.

In this application, for each bit, 0 may indicate that an ASID corresponding to the bit is not reserved, and 1 may indicate that an ASID corresponding to the bit is reserved, that is, the ASID corresponding to the bit is allocated to the process run by the second processor core. Certainly, on the contrary, 1 may indicate that an ASID corresponding to the bit is not reserved, and 0 may indicate that an ASID corresponding to the bit is reserved. Certainly, a representation form of the identifier is not limited to 0 or 1, or another identifier may indicate a reserved state or an unreserved state.

In this possible implementation, the reservation status of the second ASID allocated to the process run by the second processor core is recorded by using the reservation bitmap, so that the second ASID can be effectively prevented from being reallocated.

In a possible implementation of the first aspect, the foregoing step of determining the first ASIDs in the ASID resource pool based on the reservation information of the allocated second ASID, and updating the first ASIDs in the ASID generation iteration manner includes: determining, based on a global bitmap and the reserved state that is of the allocated second ASID and that is in the reservation bitmap, the first ASIDs on which generation iteration needs to be performed, where the global bitmap is used to record allocation statuses of ASIDs in the ASID resource pool; and updating the first ASIDs in the ASID resource pool in the ASID generation iteration manner, and modifying, from an allocated state to an unallocated state, identifiers that are in the global bitmap and that indicate statuses of the first ASIDs.

In this application, the global bitmap is a bitmap that identifies an allocation status of each ASID in the global ASID resource pool in a form of a bit. For each bit, 0 may indicate that an ASID corresponding to the bit is not allocated, and 1 may indicate that an ASID corresponding to the bit is allocated. Certainly, on the contrary, 1 may indicate that an ASID corresponding to the bit is not allocated, and 0 may indicate that an ASID corresponding to the bit is allocated. Certainly, a representation form of the identifier is not limited to 0 or 1, and another identifier may also indicate an allocated state or an unallocated state.

In this application, after the first ASIDs in the global ASID resource pool are exhausted, all bits in the global bitmap may be 1. In this way, ASIDs corresponding to bits 1 in the reservation bitmap may be reserved by copying the reservation bitmap, and ASIDs corresponding to other bits in the global bitmap are all first ASIDs that need to be updated. When the first ASIDs are updated in the generation iteration manner, bits 1 in the global bitmap except the bits corresponding to 1 in the reservation bitmap need to be reset to 0.

In this possible implementation, the first ASIDs are updated by using the global bitmap and the reservation bitmap, so that a speed of updating the first ASIDs can be improved.

In a possible implementation of the first aspect, the method further includes: when the ASID resource pool further includes an unallocated ASID, and a quantity of second ASIDs allocated to processes run by the second processor core exceeds a waterline, allocating a second ASID from the unallocated ASID to a process run by the second processor core, and modifying, from an unreserved state to a reserved state, an identifier bit that is of the second ASID allocated to the process run by the second processor core and that is in the reservation bitmap, where the waterline indicates a maximum quantity of second ASIDs reserved for the second processor core.

In this possible implementation, the waterline refers to a maximum quantity of second ASIDs reserved for the second processor core, or the waterline may be understood as a condition for triggering refreshing of the TLB in the second processor core. Refreshing of the TLB in the second processor core is triggered only when the quantity of allocated second ASIDs exceeds the waterline and there is no ASID that can be allocated in the global ASID resource pool. Provided that ASIDs in the global ASID resource pool are not exhausted, refreshing of the TLB in the second processor core is not triggered. In this way, a quantity of times of refreshing the TLB in the second processor core can be minimized, and a latency of a critical service run by the second processor core is reduced.

In a possible implementation of the first aspect, the method further includes: when the ASID resource pool does not include an unallocated ASID, and a quantity of second ASIDs allocated to processes run by the second processor core exceeds a waterline, updating all the ASIDs in the ASID resource pool, modifying, from an allocated state to an unallocated state, identifiers that indicate statuses of all the ASIDs and that are in the global bitmap, and modifying identifiers in the reservation bitmap from a reserved state to an unreserved state, where the waterline indicates a maximum quantity of second ASIDs reserved for the second processor core.

In this possible implementation, refreshing of the TLB in the second processor core is triggered only when the quantity of allocated second ASIDs exceeds the waterline and there is no ASID that can be allocated in the global ASID resource pool. This helps reduce a quantity of times of refreshing the TLB in the second processor core, and reduce a latency of a critical service run by the second processor core.

In a possible implementation of the first aspect, the method further includes: obtaining a context identifier of the process run by the second processor core; and if the context identifier of the process includes a non-isolation identifier, modifying the non-isolation identifier into an isolation identifier, and modifying, from an unreserved state to a reserved state, an identifier that is of an ASID included in the context identifier and that is in the reservation bitmap.

In this possible implementation, the context identifier (context ID) usually includes an ASID allocated to the process and a generation identifier (GEN ID) of the ASID. To facilitate determining, through one atomic operation, a status in which the ASID is allocated to the process, an isolation identifier and a non-isolation identifier are set in the context identifier in this application. The isolation identifier indicates that the ASID in the context identifier is an ASID allocated to a process of a critical service run by the second processor core. The non-isolation identifier indicates that an ASID in the context identifier is an ASID allocated to a process of a common service run by the first processor core. When the context identifier of the process run by the second processor core includes the non-isolation identifier, it indicates that process migration may occur in the process run by the second processor core, and the process is migrated from the first processor core to the second processor core. The process may alternatively be a multi-thread process, where some threads are run by the first processor core, and some threads are run by the second processor core. In this case, to avoid impact of the updating of the first ASIDs on the process run by the second processor core, the non-isolation identifier in the process needs to be modified to the isolation identifier, and a bit that is in the reservation bitmap and that corresponds to the ASID included in the process is modified from the unreserved state to the reserved state, that is, from 0 to 1. In this way, the solution of this application can be more flexibly applicable to an environment in which a process is migrated and to a scenario in which a process includes a plurality of threads and the plurality of threads run in different environments.

A second aspect of this application provides a resource management apparatus. The resource management apparatus has a function of implementing the method according to any one of the first aspect or the possible implementations of the first aspect. The function may be implemented by hardware, or may be implemented by hardware executing corresponding software. The hardware or software includes one or more modules corresponding to the foregoing function, for example, a first processing unit, a second processing unit, and a third processing unit. The three processing units may be implemented by using one or more processing units.

A third aspect of this application provides a computer device. The computer device includes at least one processor, a memory, an input/output (I/O) interface, and computer-executable instructions that are stored in the memory and that can run on the processor. When the computer-executable instructions are executed by the processor, the processor performs the method according to any one of the first aspect or the possible implementations of the first aspect.

A fourth aspect of this application provides a computer-readable storage medium storing one or more computer-executable instructions. When the computer-executable instructions are executed by a processor, the one or more processors perform the method according to any one of the first aspect or the possible implementations of the first aspect.

A fifth aspect of this application provides a computer program product storing one or more computer-executable instructions. When the computer-executable instructions are executed by a processor, the one or more processors perform the method according to any one of the first aspect or the possible implementations of the first aspect.

A sixth aspect of this application provides a chip system. The chip system includes at least one processor, and the at least one processor is configured to support a resource management apparatus in implementing the function according to any one of the first aspect or the possible implementations of the first aspect. In a possible design, the chip system may further include a memory. The memory is configured to store program instructions and data that are necessary for the resource management apparatus. The chip system may include a chip, or may include a chip and another discrete component.

### BRIEF DESCRIPTION OF DRAWINGS

FIG. 1 is a schematic diagram of a structure of a computer system according to an embodiment of this application;
FIG. 2 is a schematic diagram of an example according to an embodiment of this application;
FIG. 3 is another schematic diagram of a structure of a computer system according to an embodiment of this application;
FIG. 4 is a schematic diagram of an embodiment of a resource management method according to an embodiment of this application;
FIG. 5 is another schematic diagram of a structure of a computer system according to an embodiment of this application;
FIG. 6 is another schematic diagram of a structure of a computer system according to an embodiment of this application;
FIG. 7 is a schematic diagram of an example of a reservation bitmap according to an embodiment of this application;
FIG. 8 is a schematic diagram of an example of a global bitmap according to an embodiment of this application;
FIG. 9 is a schematic diagram of an example scenario of a resource management method according to an embodiment of this application;
FIG. 10 is a schematic diagram of another embodiment of a resource management method according to an embodiment of this application;
FIG. 11 is a schematic diagram of another example scenario of a resource management method according to an embodiment of this application;
FIG. 12 is a schematic diagram of an example of a context identifier of a process according to an embodiment of this application;
FIG. 13 is a schematic diagram of an embodiment of a resource management apparatus according to an embodiment of this application; and
FIG. 14 is a schematic diagram of a structure of a computer device according to an embodiment of this application.

### DESCRIPTION OF EMBODIMENTS

The following describes embodiments of this application with reference to accompanying drawings. It is clear that the described embodiments are merely some but not all of embodiments of this application. A person of ordinary skill in the art may learn that, with technical development and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way is interchangeable in proper circumstances so that the embodiments of the present invention described herein can be implemented in orders other than the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

An embodiment of this application provides a resource management method, used to manage an address space identifier (ASID), to reduce a latency of a critical service run by an isolated central processing unit (CPU) core. This application further provides a corresponding apparatus, a computer device, a computer-readable storage medium, a computer program product, and the like. Details are separately described in the following.

The resource management method provided in this embodiment of this application is applied to a computer system. The computer system may be a server, a terminal device, a virtual machine (VM), a container (container), or the like.

The terminal device (which may also be referred to as user equipment (UE)) is a device having a wireless transceiver function, and may be deployed on land, for example, including an indoor or outdoor device, a handheld device, or a vehicle-mounted device, may be deployed on water (for example, on a ship), or may be deployed in the air (for example, on an airplane, a balloon, and a satellite). The terminal may be a mobile phone (mobile phone), a tablet computer (pad), a computer having a wireless transceiver function, a virtual reality (VR) terminal, an augmented reality (AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

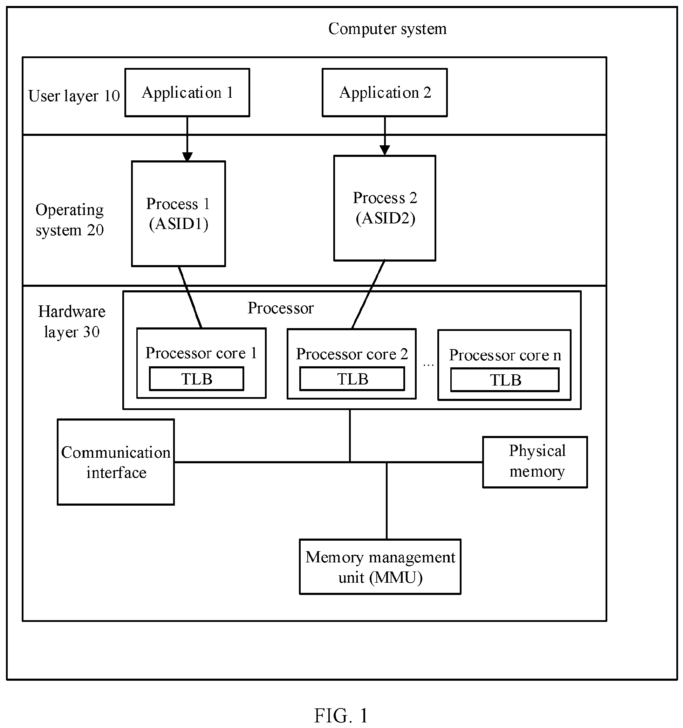

The structure of the computer system may be understood with reference to FIG. 1. FIG. 1 is a schematic diagram of a structure of a computer system.

As shown in FIG. 1, the structure of the computer system includes a user layer 10, an operating system 20, and a hardware layer 30.

The user layer 10 includes a plurality of applications (APP), and each application may correspond to one process when running. For example, a process of an application 1 is a process 1 when the application 1 is running, and a process of an application 2 is a process 2 when the application 2 is running.

The operating system (OS) 20 is used to run a process of each application, for example, the process 1 and the process 2.

The hardware layer 30 includes a communication interface, a processor, a physical memory, a memory management unit (MMU), a bus, and the like. The communication interface, the processor, the physical memory, and the MMU are connected through the bus. The processor may include a central processing unit (CPU) or any type of general-purpose computing circuit or dedicated logic circuit, for example, a field programmable gate array (FPGA) or an application-specific integrated circuit (ASIC). The processor may alternatively be one or more processors coupled to one or more semiconductor substrates, such as a central processing unit (CPU). The physical memory may be configured as multiple memory spaces. The MMU is computer hardware responsible for processing a memory access request from the central processing unit (CPU). A function of the MMU includes translation from a virtual address to a physical address, memory protection, and CPU cache control.

There may be a plurality of CPUs, and each CPU may also have a plurality of "cores". The core is referred to as a processor core in this embodiment of this application. As shown in FIG. 1, the processor includes a processor core 1, a processor core 2, ..., and a processor core n, where n is an integer greater than 2. Certainly, FIG. 1 shows a scenario in which there are at least three processor cores. Actually, the computer system may alternatively include two processor cores. Each processor core includes a translation lookaside buffer (TLB). In a running process of a process, to access data on a physical page, a corresponding physical address usually needs to be searched for based on a virtual address and an entry, to access the data on the corresponding physical page. The entry records a mapping relationship between the virtual address and the corresponding physical address. The entry exists in a page table. However, if an entry is recently used, the entry is also cached in a TLB in a corresponding processor core. The entry cached in the TLB may be referred to as a TLB entry. In this way, when the processor core runs the process to use the entry again, the processor core may obtain the entry from the TLB in the processor core, to quickly access a corresponding physical page.

One process may be run by each processor core at a time point. For example, the processor core 1 runs the process 1, and the processor core 2 runs the process 2. Certainly, at different time points, the process 1 and the process 2 may also be run by another processor core. A processor core occupied by a process during running may be scheduled and configured at a software layer.

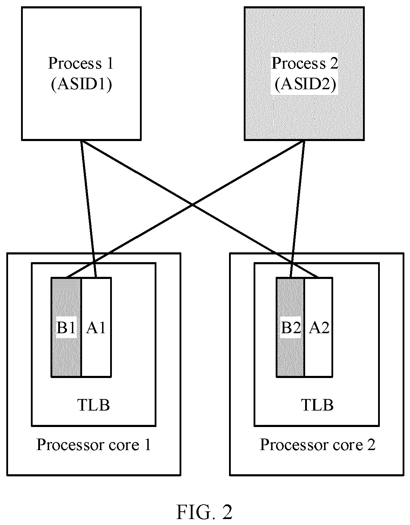

When each process runs for the first time, the operating system allocates an address space identifier (ASID) to the process. For example, an ASID1 is allocated to the process 1 when the process runs for the first time, and an ASID2 is allocated to the process 2 when the process runs for the first time. A TLB in a processor core that runs the process caches an ASID allocated to the process. In the TLB, the ASID of the process is associated with a TLB entry used by the process for caching. As shown in FIG. 2, when the process 1 is run by a processor core 1, the TLB in the processor core 1 caches a correspondence between the ASID1 of the process 1 and a TLB entry, as shown by a strip A1 in the TLB. When the process 1 is run by the processor core 2, the TLB in the processor core 2 caches a correspondence between the ASID1 of the process 1 and a TLB entry, as shown by a strip A2 in the TLB. Similarly, when the process 2 is run by the processor core 1, the TLB in the processor core 1 caches a correspondence between the ASID2 of the process 1 and a TLB entry, as shown by a strip B1 in the TLB. When the process 2 is run by the processor core 2, the TLB in the processor core 2 caches a correspondence between the ASID2 of the process 2 and a TLB entry, as shown by a strip B2 in the TLB. In this way, when the processor core runs the process next time, the corresponding TLB entry may be found based on the ASID of the process, to implement fast translation from a virtual address to a physical address, thereby quickly accessing a corresponding physical page.

With development of technologies, some service scenarios are sensitive to a latency. For example, a 5G scenario and an edge computing scenario have a high requirement on a latency. To ensure running of these latency-sensitive services, an isolation technology may be used to divide a processor core of a processor into a common core and an isolated core, and the isolated core runs in an isolated environment. In this embodiment of this application, the "isolated environment" may refer to software isolation. A process scheduling policy may be set by using an isolation technology, so that a latency-sensitive service is run by an isolated core, and a latency-insensitive service is run by a common core. In this embodiment of this application, a process run by a common core may be referred to as a process of a common service, and a process run by an isolated core may be referred to as a process of a critical service.

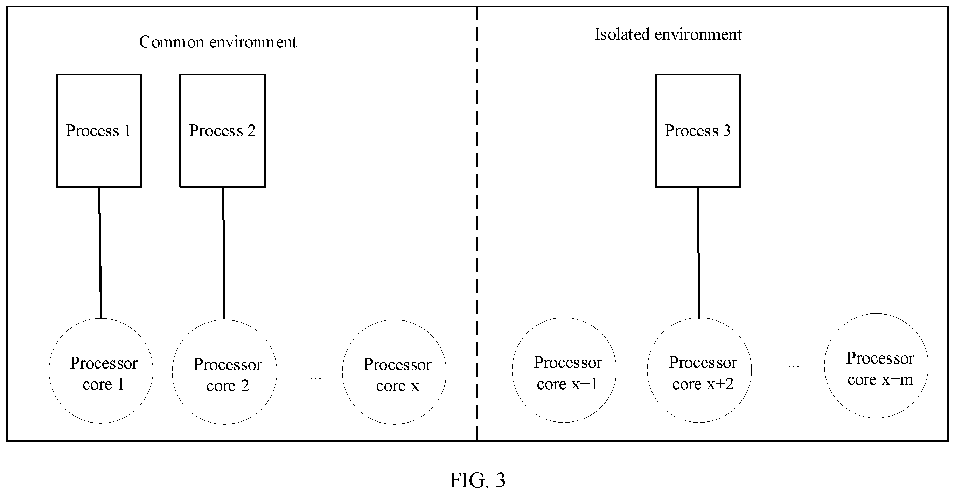

As shown in FIG. 3, processor cores in a computer system are recorded as two types through software configuration. One is a common core, for example, a processor core 1, a processor core 2, ..., and a processor core x, and the other is an isolated core, for example, a processor core (x+1), a processor core (x+2), ..., and a processor core (x+m). It may also be understood that the common core runs in a common environment, and the isolated core runs in an isolated environment. The common environment and the isolated environment are not limited to physical isolation on hardware. Different types of processes may be scheduled to different processor cores through software configuration. For example, a latency-sensitive process 3 is scheduled to the processor core x+2 for running, a latency-insensitive process 1 is scheduled to the processor core 1 for running, and a latency-insensitive process 2 is scheduled to the processor core 2 for running.

Even if the processor core is recorded as two types: a common core and an isolated core, a manner in which the operating system allocates an ASID to the process remains unchanged, that is, an ASID is applied for from an ASID resource pool, and a unique ASID is allocated to the process when the process runs for the first time, until the ASID of the process is invalidated. ASIDs are usually a series of indexes, a quantity of ASIDs is usually limited, and processes in the computer system are infinite. Therefore, after the ASIDs in the ASID resource pool are exhausted, generation (generation) iteration of the ASIDs needs to be performed to update the ASIDs in the resource pool. Generation iteration refers to the reuse of ASIDs in the resource pool by changing a generation identifier (GEN ID). To avoid ASID conflicts of different generations, after generation iteration occurs, the computer system invalidates an ASID that is of a previous generation and that is allocated to a process before generation iteration, and refreshes a TLB in a corresponding processor core, to avoid that a same ASID corresponds to two different TLB entries (TLB entry) in the TLB, thereby causing a physical address access error.

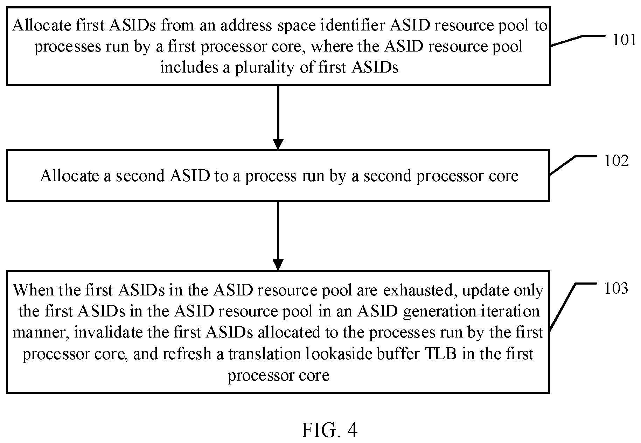

Because a quantity of processes of common services is large, the processes of the common services occupy a large quantity of ASIDs. If the ASIDs are exhausted, generation iteration of the ASIDs needs to be performed. In this case, TLBs in the common core and the isolated core need to be refreshed, which causes a latency jitter of a critical service. To avoid and reduce the latency jitter of the critical service, the foregoing computer system is based on, and the computer system includes a first processor core and a second processor core that is in an isolated environment. This embodiment of this application provides a resource management method. As shown in FIG. 4, an embodiment of the resource management method includes the following steps.

101: Allocate first ASIDs from an address space identifier ASID resource pool to processes run by the first processor core, where the ASID resource pool includes a plurality of first ASIDs.

In this embodiment of this application, both the first processor core and the second processor core are CPU cores. There may be one or more first processor cores, and there may also be one or more second processor cores. "A plurality of" in this application means two or more than two. For example, the first processor core may be the processor core 1, the processor core 2, ..., and the processor core x in FIG. 3, and the second processor core may be a processor core (x+1), a processor core (x+2), ..., and a processor core (x+m) in FIG. 3.

102: Allocate a second ASID to a process run by a second processor core.

The first ASID refers to an ASID allocated to a process of a common service, and the second ASID refers to an ASID allocated to a process of a critical service. There are a plurality of first ASIDs, and each first ASID is different. There may be one or more second ASIDs, and each second ASID is different. In addition, the first ASID is different from the second ASID.

103: When the first ASIDs in the ASID resource pool are exhausted, update only the first ASIDs in the ASID resource pool in an ASID generation iteration manner, invalidate the first ASIDs allocated to the processes run by the first processor core, and refresh a translation lookaside buffer TLB in the first processor core.

In this embodiment of this application, after the first ASIDs in the resource pool are exhausted, only the first ASIDs allocated to the processes run by the first processor core are updated, and the second ASID allocated to the process run by the second processor core is not updated, and only the TLB in the first processor core is refreshed, but the TLB in the second processor core is not refreshed. In this way, the TLB in the second processor core stores the TLB entry of the process of the critical service. When the process of the critical service needs to access a corresponding physical address, the corresponding physical address may be directly found by querying the TLB in the second processor core, and the corresponding physical address does not need to be searched for by using a page table, thereby accelerating an access speed of the physical address and reducing a latency of the critical service.

Optionally, in the resource management solution provided in this embodiment of this application, the first ASID and the second ASID may be located in a same global ASID resource pool, or may be located in two different ASID resource pools. The following provides specific descriptions.
I. The first ASID and the second ASID are located in two different ASID resource pools.

The computer system may maintain two ASID resource pools. One resource pool includes first ASIDs, to provide ASIDs for processes of common services. The other ASID resource pool includes second ASIDs, to provide ASIDs for processes of critical services. ASIDs in the two resource pools are different. When there are two ASID resource pools, the resource pool including the second ASIDs includes a plurality of second ASIDs.

In this way, the foregoing step 102 includes: allocating the second ASID from another ASID resource pool to the process run by the second processor core, where the another ASID resource pool includes a plurality of second ASIDs.

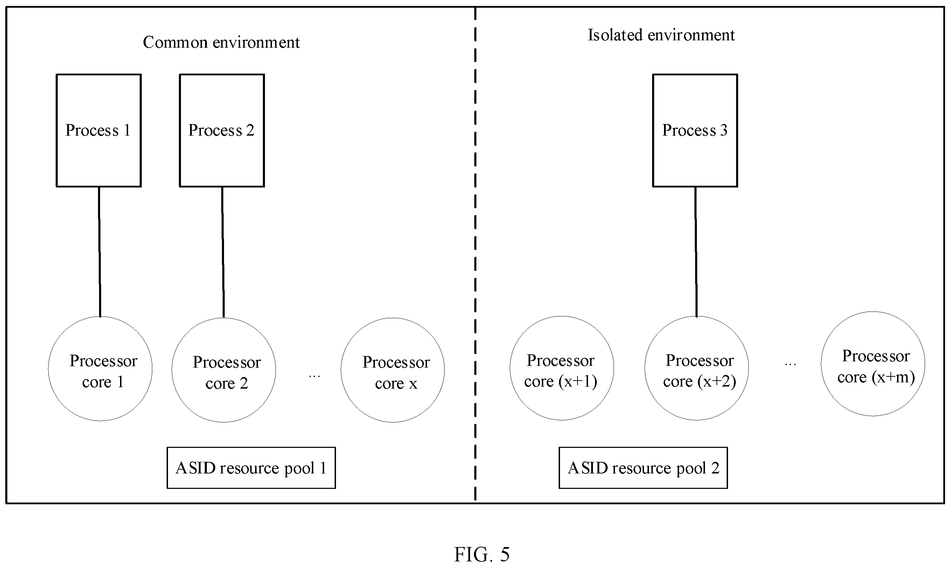

As shown in FIG. 5, the computer system maintains an ASID resource pool 1 for a common environment, and maintains an ASID resource pool 2 for an isolated environment. In this way, when an ASID is allocated to a process run by any processor core of the processor core 1, the processor core 2, ..., and the processor core x, the ASID may be applied for from the ASID resource pool 1; and when an ASID is allocated to a process run by any processor core of the processor core (x+1), the processor core (x+2), ..., and the processor core (x+m), the ASID may be applied for from the ASID resource pool 2.

ASIDs in the ASID resource pool 1 and in the ASID resource pool 2 are different. For example, the computer system has 60000 ASIDs, and index sequence numbers are from 00001 to 60000. An ASID resource pool 1 may include ASIDs from 00001 to 55000, and an ASID resource pool 2 may include ASIDs from 55001 to 60000. Certainly, allocation of the ASIDs in the two resource pools is merely an example herein, and a specific division manner may be set based on a requirement.

Generally, because processes of critical services created by a computer system are much less than processes of common services, the second ASIDs are consumed slowly. Even if the first ASIDs are consumed quickly, because generation iteration occurs, the second ASIDs are not affected. Without generation iteration for the second ASID, the TLB in the second processor core does not need to be refreshed. In this way, the TLB in the second processor core stores TLB entries of processes of critical services. When the process of the critical service needs to access a corresponding physical address, the corresponding physical address may be directly found by querying the TLB in the second processor core, and the corresponding physical address does not need to be searched for by using a page table, thereby accelerating an access speed of the physical address and reducing a latency of the critical service.

II. The first ASID and the second ASID are located in a same global ASID resource pool.

When there is only one global ASID resource pool in the computer system, the foregoing step 102 includes: allocating the second ASID from the ASID resource pool to the process run by the second processor core, where the ASID resource pool includes at least one second ASID; and storing reservation information of the allocated second ASID, where the reservation information indicates that the allocated second ASID is reserved.

The foregoing step 103 includes: determining the first ASIDs in the ASID resource pool based on the reservation information of the allocated second ASID, and updating the first ASIDs in the ASID generation iteration manner.

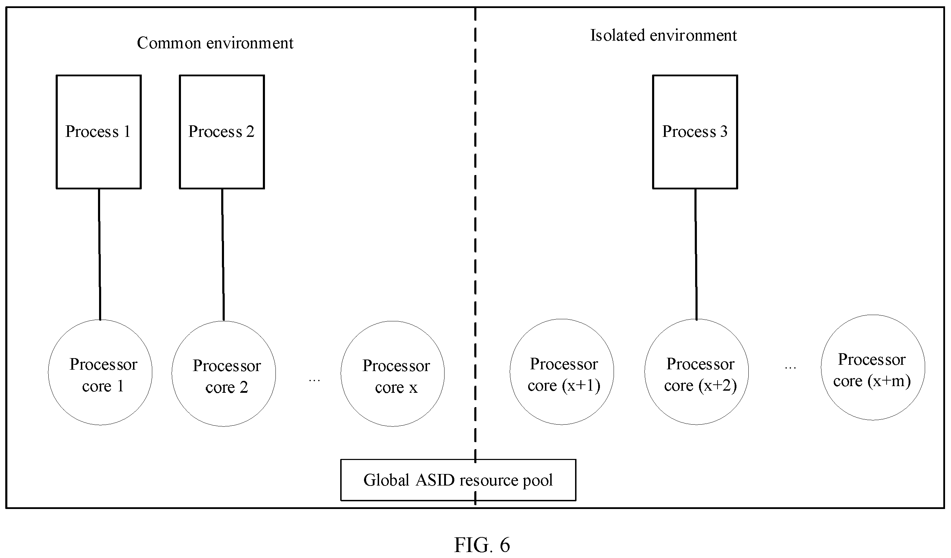

As shown in FIG. 6, the computer system maintains only one global ASID resource pool for a common environment and an isolated environment. In this way, when an ASID is allocated to a process run by any processor core of the processor core 1, the processor core 2, ..., and the processor core x, the ASID needs to be applied for from the global ASID resource pool; and when an ASID is allocated to a process run by any processor core of the processor core (x+1), the processor core (x+2), ..., and the processor core (x+m), the ASID also needs to be applied for from the global ASID resource pool. For example, there are 60000 ASIDs in the global ASID resource pool, and the index sequence numbers are from 00001 to 60000. The ASIDs allocated to the processes of the common services and the ASID allocated to the process of the critical service may be allocated according to an application sequence. For example, if a computer system first runs 100 processes of the common services, and then a process of the critical service applies for an ASID, 00001 to 00100 are allocated to the first 100 processes of the common services, and 00101 is allocated to the process of the critical service. In the middle, nine processes of common services apply for 00102 to 00110, and another process of a critical service applies for 00111. In this example, 00001 to 00100 and 00102 to 00110 are all first ASIDs, and 00101 and 00111 are second ASIDs. Reservation information of the second ASID needs to be stored, and the computer system stores reservation information that is reserved for 00101 and 00111. In this way, when the ASIDs in the global ASID resource pool are exhausted and are updated in a generation iteration manner, which ASID belongs to the second ASID may be determined based on the stored reservation information, to determine other first ASIDs, and to update the first ASIDs instead of updating the second ASID. For example, after the 60000 ASIDs are exhausted, it is determined, based on the reservation information, that 00101 and 00111 are reserved, and it may be determined that iterative update needs to be performed from 00001 to 00100, 00102 to 00110, and 00112 to 60000. In this case, 00001 to 00100, 00102 to 00110, and 00112 to 60000 are updated, 00101 and 00111 do not need to be updated, and a TLB in a processor core in an isolated environment does not need to be updated, thereby avoiding a latency jitter of a critical service.

Such a manner in which the computer system maintains only one global ASID resource pool to manage the ASIDs is more conducive to improving utilization of the ASID.

In this embodiment of this application, the reservation information may be stored by using a reservation bitmap. The reservation bitmap indicates a reservation status of the ASID in a form of bits. A quantity of bits in the reservation bitmap is equal to a quantity of ASIDs in the global ASID resource pool. Each bit in the reservation bitmap indicates an identifier bit of an ASID, and the identifier bit may indicate a reservation status of the ASID by using an identifier. For example, for each bit, 0 may indicate that an ASID corresponding to the bit is not reserved, and 1 may indicate that an ASID corresponding to the bit is reserved. Certainly, on the contrary, 1 may indicate that an ASID corresponding to the bit is not reserved, and 0 may indicate that an ASID corresponding to the bit is reserved. Certainly, a representation form of the identifier is not limited to 0 or 1, or another identifier may indicate a reserved state or an unreserved state. For example, if the computer system has 60000 ASIDs, there are 60000 bits in the reserved bitmap. The 60000 ASIDs are in a one-to-one correspondence with the 60000 bits, and each bit corresponds to one ASID.

Optionally, in this embodiment of this application, storing reservation information of the allocated second ASID by using a reservation bitmap may be modifying, from an unreserved state to a reserved state in a reservation bitmap, an identifier in an identifier bit corresponding to the allocated second ASID, where the reservation bitmap is used to record a reservation status of each ASID in the ASID resource pool.

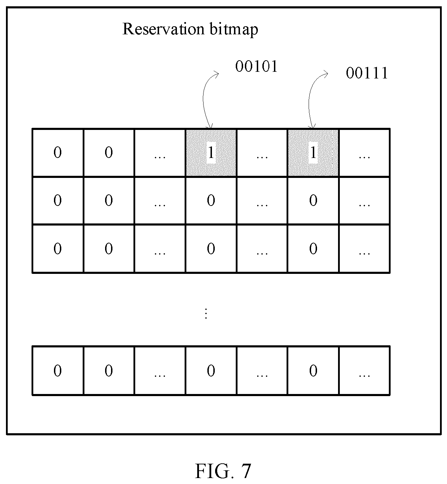

For example, if 00101 and 00111 are reserved, identifiers of bits corresponding to 00101 and 00111 in the reservation bitmap are modified from 0 to 1. As shown in FIG. 7, a bit identifier corresponding to 00101 is modified to 1, a bit identifier corresponding to 00111 is modified to 1, and identifiers of other bits are all 0.

After the reservation bitmap is used, the determining the first ASIDs in the ASID resource pool based on the reservation information of the allocated second ASID, and updating the first ASIDs in the ASID generation iteration manner may include: determining, based on a global bitmap and the reserved state that is of the allocated second ASID and that is in the reservation bitmap, the first ASIDs on which generation iteration needs to be performed, where the global bitmap is used to record allocation statuses of ASIDs in the ASID resource pool; and updating the first ASIDs in the ASID resource pool in the ASID generation iteration manner, and modifying, from an allocated state to an unallocated state, identifiers that are in the global bitmap and that indicate statuses of the first ASIDs.

In this embodiment of this application, the global bitmap is a bitmap that identifies an allocation status of each ASID in the global ASID resource pool in a form of a bit. For each bit, 0 may indicate that an ASID corresponding to the bit is not allocated, and 1 may indicate that an ASID corresponding to the bit is allocated. Certainly, on the contrary, 1 may indicate that an ASID corresponding to the bit is not allocated, and 0 may indicate that an ASID corresponding to the bit is allocated. Certainly, a representation form of the identifier is not limited to 0 or 1, and another identifier may also indicate an allocated state or an unallocated state.

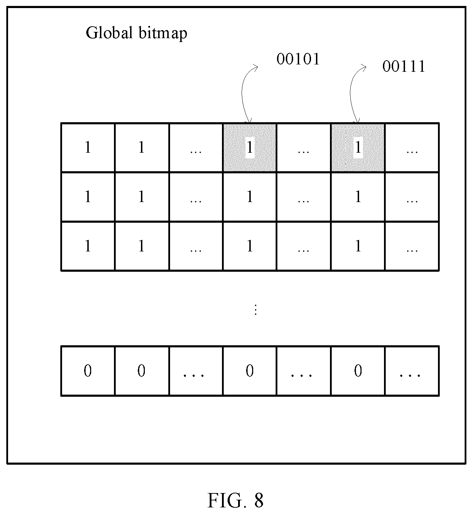

For example, if the computer system has 60000 ASIDs, there are 60000 bits in the global bitmap. The 60000 ASIDs are in a one-to-one correspondence with the 60000 bits, and each bit corresponds to one ASID. As shown in FIG. 8, in the global bitmap, regardless of whether the ASID is allocated to a process of a common service or a process of a critical service, if the ASID is allocated, a bit corresponding to the ASID in the global bitmap is modified from 0 to 1.

In this way, after the first ASIDs in the global ASID resource pool are exhausted, all bits in the global bitmap may be 1. In this way, ASIDs corresponding to bits 1 in the reservation bitmap may be reserved by copying the reservation bitmap, and ASIDs corresponding to other bits in the global bitmap are all first ASIDs that need to be updated. When the first ASIDs are updated in the generation iteration manner, bits 1 in the global bitmap except the bits corresponding to 1 in the reservation bitmap need to be reset to 0.

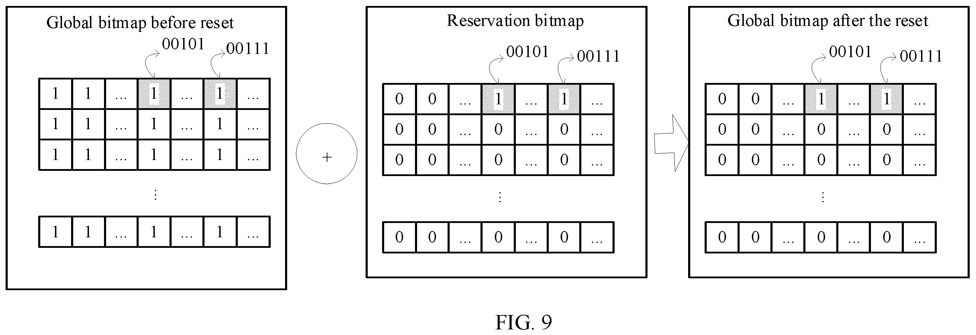

A process of updating the first ASIDs based on the reservation bitmap and the global bitmap may be understood with reference to FIG. 9. As shown in FIG. 9, if an identifier of each bit in the global bitmap before the reset is 1, it indicates that ASIDs in the global ASID resource pool are exhausted, and the ASIDs need to be updated. In this case, it needs to be determined, with reference to the reservation bitmap, that reserved ASIDs are 00101 and 00111, and then it is determined that generation iteration needs to be performed on ASIDs corresponding to other bits, and a bit of an ASID on which iteration is performed in the global bitmap needs to be reset, where 1 is reset to 0. In this way, the global bitmap after the reset in FIG. 9 is obtained.

In this embodiment of this application, the reservation status of the second ASID allocated to the process run by the second processor core is recorded by using the reservation bitmap, so that the second ASID can be effectively prevented from being reallocated.

In this embodiment of this application, to control a quantity of ASIDs used for the isolated core, a waterline is further set. The waterline indicates a maximum quantity of second ASIDs reserved for the second processor core. In this embodiment of this application, a quantity of times of flushing the TLB in the isolated core can be further reduced through waterline control.

In this embodiment of this application, whether to iteratively update the second ASID is considered only after the quantity of allocated second ASIDs exceeds the waterline. The allocated second ASID is updated with iterative update of the global ASIDs only after the first ASIDs are also exhausted.

That is, when the ASID resource pool further includes an unallocated ASID, and a quantity of second ASIDs allocated to processes run by the second processor core exceeds a waterline, a second ASID is allocated from the unallocated ASID to a process run by the second processor core, and an identifier bit that is of the second ASID allocated to the process run by the second processor core and that is in the reservation bitmap is modified from an unreserved state to a reserved state, where the waterline indicates a maximum quantity of second ASIDs reserved for the second processor core.

Alternatively, when the ASID resource pool does not include an unallocated ASID, and a quantity of second ASIDs allocated to processes run by the second processor core exceeds a waterline, all the ASIDs in the ASID resource pool are updated, identifiers that indicate statuses of all the ASIDs and that are in the global bitmap are modified from an allocated state to an unallocated state, and identifiers in the reservation bitmap are modified from a reserved state to an unreserved state, where the waterline indicates a maximum quantity of second ASIDs reserved for the second processor core.

In this embodiment of this application, the waterline may be understood as a condition for triggering refreshing of the TLB in the second processor core. Refreshing of the TLB in the second processor core is triggered only when the quantity of allocated second ASIDs exceeds the waterline and there is no ASID that can be allocated in the global ASID resource pool. Provided that ASIDs in the global ASID resource pool are not exhausted, refreshing of the TLB in the second processor core is not triggered. In this way, a quantity of times of refreshing the TLB in the second processor core can be minimized, and a latency of a critical service run by the second processor core is reduced.

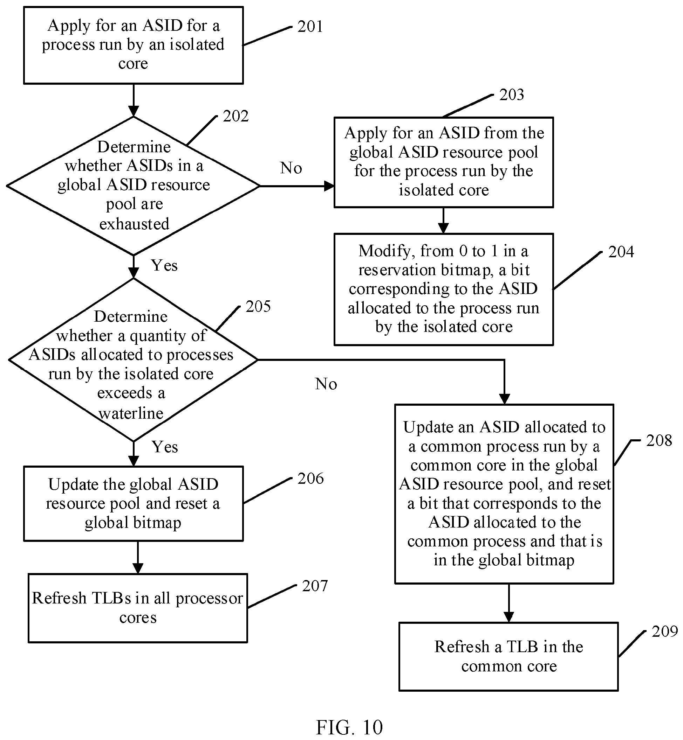

The foregoing process may be understood with reference to FIG. 10. As shown in FIG. 10, another embodiment of resource management according to an embodiment of this application includes the following steps.

201: Apply for an ASID from a global ASID resource pool for a process run by an isolated core.

202: Determine whether ASIDs in the global ASID resource pool are exhausted, and if the ASIDs are exhausted, perform step 205, or if the ASIDs are not exhausted, perform steps 203 and 204.

203: Apply for an ASID from the global ASID resource pool for the process run by the isolated core.

204: Modify, from 0 to 1 in a reservation bitmap, a bit corresponding to the ASID allocated to the process run by the isolated core.

205: Determine whether a quantity of ASIDs allocated to processes run by the isolated core exceeds a waterline, and if the quantity exceeds the waterline, perform steps 206 and 207, or if the quantity does not exceed the waterline, perform steps 208 and 209.

206: If the quantity of ASIDs allocated to the processes run by the isolated core exceeds the waterline, update the global ASID resource pool and reset a global bitmap.

207: Refresh TLBs in all processor cores.

208: If the quantity of ASIDs allocated to the processes run by the isolated core does not exceed the waterline, update an ASID allocated to a common process run by a common core in the global ASID resource pool, and reset a bit that corresponds to the ASID allocated to the common process and that is in the global bitmap, that is, modify the bit from 1 to 0.

209: Refresh a TLB in the common core.

In this embodiment of this application, refreshing of the TLB in the isolated core is triggered only when the quantity of ASIDs allocated to the isolated core exceeds the waterline and there is no ASID that can be allocated in the global ASID resource pool. This helps reduce a quantity of times of refreshing the TLB in the isolated core, and reduce a latency of a critical service run by the isolated core.

In this embodiment of this application, ASIDs are managed by using a global ASID resource pool. In this way, an ASID allocated to a process run by a first processor core and an ASID allocated to a process run by a second processor core do not need to be forcibly divided. This helps improve ASID utilization. In addition, this is applicable to process migration scenarios and a scenario in which a plurality of threads of a process run in different environments. The process migration scenarios include a scenario in which a process is migrated from a common core to an isolated core and a scenario in which a process is migrated from an isolated core to a common core. The following describes these scenarios in detail.
I. Process migration scenarios.
   1. A scenario in which a process is migrated from a common core to an isolated core.

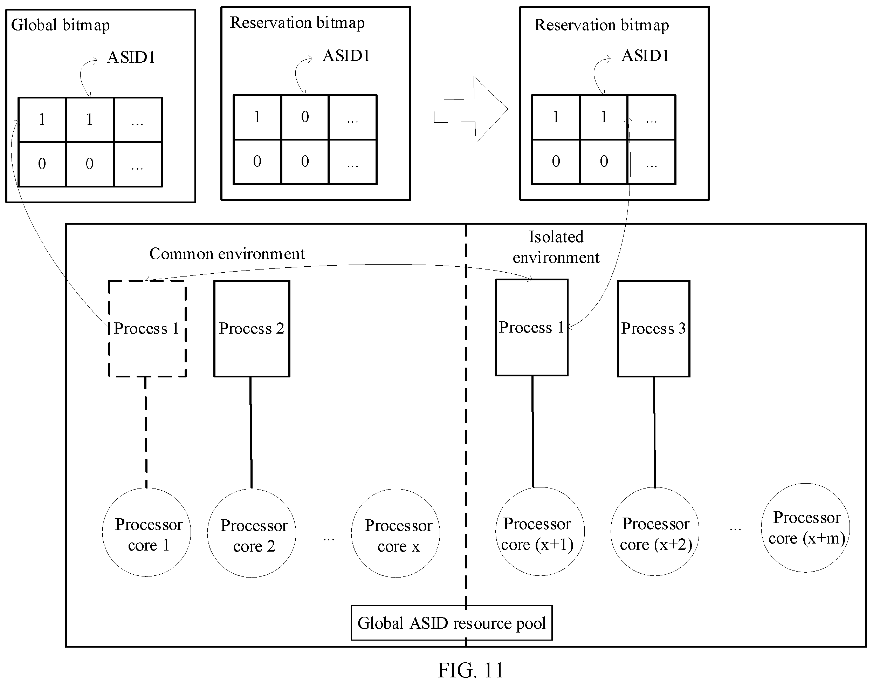

As shown in FIG. 11, a process 1 is originally run by a processor core 1 in a common environment. When the process 1 is run for the first time, an ASID allocated by a computer system to the process 1 is an ASID1, and a bit corresponding to the ASID1 is modified from 0 to 1 in a global bitmap. Because the process 1 is a process run by the processor core 1, namely, a process run by the common core, a bit corresponding to the ASID1 does not change in a reservation bitmap, a bit identifier is still 0. In this case, a context identifier (context ID) of the process 1 may include a generation identifier (GEN ID) of the ASID1 and the ASID1. In this embodiment of this application, an isolation identifier or a non-isolation identifier may be set in one or more bits in the generation identifier (GEN ID). The isolation identifier indicates that the ASID1 belongs to an isolation group, that is, the second ASID, and the non-isolation identifier indicates that the ASID1 belongs to a non-isolation group, that is, the first ASID.

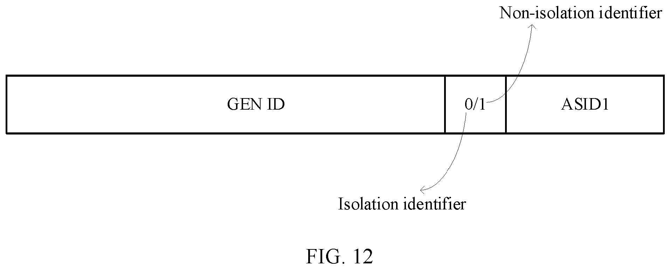

The context identifier of the process 1 may be understood with reference to FIG. 12. As shown in FIG. 12, an isolation identifier or a non-isolation identifier is set in one or more bits in 48 bits. For example, the isolation identifier or the non-isolation identifier is set in one bit. If the bit is 0, it indicates that the ASID1 belongs to the isolation group. If the bit is 1, it indicates that the ASID1 belongs to the non-isolation group. Certainly, on the contrary, if the bit is 1, it indicates that the ASID1 belongs to an isolation group; or if the bit is 0, it indicates that the ASID1 belongs to a non-isolation group. In this embodiment of this application, because the process 1 is run by the processor core 1 for the first time, a non-isolation identifier is set in the context ID of the process 1. For example, 1 indicates that the ASID1 belongs to the non-isolation group.

When the process 1 is migrated from the processor core 1 in the common environment to a processor core (x+1) in an isolated environment for running, the context ID of the process 1 may be obtained, that is, the generation identifier (GEN ID) of the ASID1, the ASID1, and that the ASID1 belongs to a non-isolation group may be obtained. After the process is run by the processor core (x+1) in the isolated environment, if the ASID1 is not reserved, the ASID1 is updated with the update of first ASIDs. In this way, a latency of a critical service in the isolated environment is affected. Therefore, when it is determined that the context identifier of the process 1 includes the non-isolation identifier, the non-isolation identifier is modified to an isolation identifier, the identifier of the ASID1 included in the context identifier in the reservation bitmap is modified from an unreserved state to a reserved state. As shown in FIG. 11, the bit corresponding to the ASID1 in the reservation bitmap is modified from 0 to 1 after migration of the process 1.

2. A scenario in which a process is migrated from an isolated core to a common core.

A process 3 in FIG. 11 is used as an example. The process 3 is originally run by a processor core (x+2) in an isolated environment. When the process 3 is run for the first time, an ASID allocated by a computer system to the process 3 is an ASID2, and a bit corresponding to the ASID2 is modified from 0 to 1 in a global bitmap, and a bit corresponding to the ASID2 is modified from 0 to 1 in a reservation bitmap. If the process 3 is migrated from the isolated environment to the common environment scenario, even if the bit in the reservation bitmap is not modified from 1 to 0, a TLB in the isolated core is not affected. Therefore, the bit of the ASID2 in the reservation bitmap may not be processed.

II. A scenario in which a plurality of threads of a process run in different environments.

An ASID allocated when a process is run for the first time is a first ASID, namely, an ASID of a process of a common service. Regardless of a quantity of threads in a process, an ASID of each thread is the same, and is an ASID allocated to the process. In this case, a context of the process includes a non-isolation identifier. After a process is run for a period of time, a plurality of threads may run. Some threads still run in a common environment, and some threads run in an isolated environment. In this case, a context of a thread run by a processor core in the isolated environment includes the non-isolation identifier. To prevent the update of first ASIDs in a global ASID resource pool from affecting a TLB in an isolated core, the foregoing process migration solution may be used to manage the ASID of the multi-thread process.

It can be learned from the foregoing description that the resource management solution provided in this embodiment of this application can be more flexibly applicable to various dynamic change scenarios.

In addition, the isolation identifier or the non-isolation identifier in the context identifier of the process is determined, so that ASID management in a process migration scenario, in a scenario in which a process runs across environments, and in a scenario in which a process includes a plurality of threads may be completed through one atomic operation. A lock for managing an ASID resource pool does not need to be used for a plurality of times, thereby improving performance of a computer system.

In a research and development process, an engineer of this application applies the solution of this application to a physical machine and a virtual machine, and tests a latency in this application and a latency in a conventional technology (a global update is performed in an ASID resource pool each time, and TLBs in all processor cores are refreshed) by using a test suite (Cyclictest) for testing a latency jitter, to obtain data shown in Table 1.

**Table 1: Experiment data**

| | Latency used on a physical machine | Latency used on a virtual machine |
|---|---|---|
| Conventional technology | 18 microseconds (µs) | 360 microseconds |
| Solution of this application | 4 microseconds | 90 microseconds |

It can be learned from Table 1 that, in comparison with a solution in the conventional technology, in the resource management solution provided in this embodiment of this application, a latency jitter on both a physical machine and a virtual machine is greatly reduced.

The foregoing describes the resource management method. The following describes a resource management apparatus provided in embodiments of this application with reference to the accompanying drawings.

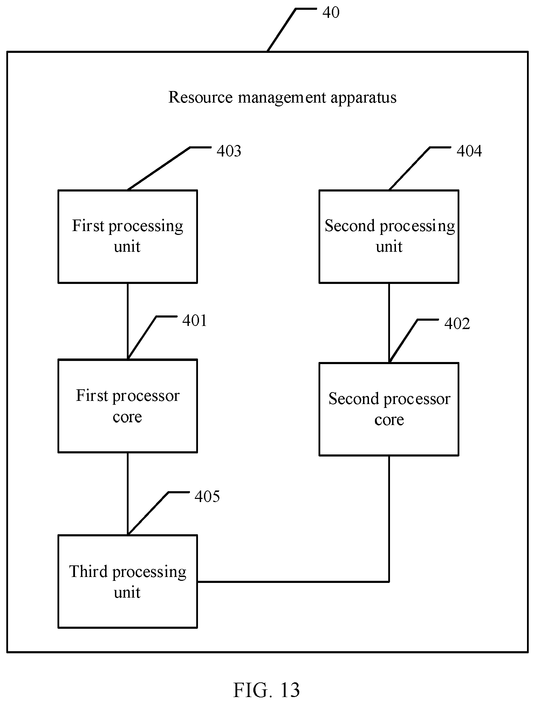

As shown in FIG. 13, an embodiment of a resource management apparatus 40 provided in this embodiment of this application includes a first processor core 401, a second processor core 402 that is in an isolated environment, a first processing unit 403, a second processing unit 404, and a third processing unit 405.

The first processing unit 403 is configured to allocate first ASIDs from an address space identifier ASID resource pool to processes run by the first processor core 401, where the ASID resource pool includes a plurality of first ASIDs. The first processing unit 403 is configured to perform step 101 in the foregoing method embodiment.

The second processing unit 404 is configured to allocate a second ASID to a process run by the second processor core 402. The second processing unit 404 is configured to perform step 102 in the foregoing method embodiment.

The third processing unit 405 is configured to: when the first ASIDs in the ASID resource pool are exhausted, update only the first ASIDs in the ASID resource pool in an ASID generation iteration manner, invalidate the first ASIDs allocated to the processes run by the first processor core 401, and refresh a translation lookaside buffer TLB in the first processor core 401.

In this embodiment of this application, after the first ASIDs in the resource pool are exhausted, only the first ASIDs allocated to the processes run by the first processor core are updated, and the second ASID allocated to the process run by the second processor core is not updated, and only the TLB in the first processor core is refreshed, but a TLB in the second processor core is not refreshed. In this way, the TLB in the second processor core stores a TLB entry of the process of the critical service. When the process of the critical service needs to access a corresponding physical address, the corresponding physical address may be directly found by querying the TLB in the second processor core, and the corresponding physical address does not need to be searched for by using a page table, thereby accelerating an access speed of the physical address and reducing a latency of the critical service.

Optionally, the second processing unit 404 is configured to allocate the second ASID from another ASID resource pool to the process run by the second processor core, where the another ASID resource pool includes a plurality of second ASIDs.

Optionally, the second processing unit 404 is configured to allocate the second ASID from the ASID resource pool to the process run by the second processor core, where the ASID resource pool includes at least one second ASID; and store reservation information of the allocated second ASID, where the reservation information indicates that the allocated second ASID is reserved.

The third processing unit 405 is configured to determine the first ASIDs in the ASID resource pool based on the reservation information of the allocated second ASID, and update the first ASIDs in the ASID generation iteration manner.

Optionally, the second processing unit 404 is configured to modify, from an unreserved state to a reserved state in a reservation bitmap, an identifier in an identifier bit corresponding to the allocated second ASID, where the reservation bitmap is used to record a reservation status of each ASID in the ASID resource pool.

Optionally, the third processing unit 405 is configured to: determine, based on a global bitmap and the reserved state that is of the allocated second ASID and that is in the reservation bitmap, the first ASIDs on which generation iteration needs to be performed, where the global bitmap is used to record allocation statuses of ASIDs in the ASID resource pool; and update the first ASIDs in the ASID resource pool in the ASID generation iteration manner, and modify, from an allocated state to an unallocated state, identifiers that are in the global bitmap and that indicate statuses of the first ASIDs.

Optionally, the third processing unit 405 is further configured to: when the ASID resource pool further includes an unallocated ASID, and a quantity of second ASIDs allocated to processes run by the second processor core exceeds a waterline, allocate a second ASID from the unallocated ASID to a process run by the second processor core, and modify, from an unreserved state to a reserved state, an identifier bit that is of the second ASID allocated to the process run by the second processor core and that is in the reservation bitmap, where the waterline indicates a maximum quantity of second ASIDs reserved for the second processor core.

Optionally, the third processing unit 405 is further configured to: when the ASID resource pool does not include an unallocated ASID, and a quantity of second ASIDs allocated to processes run by the second processor core exceeds a waterline, update all the ASIDs in the ASID resource pool, modify, from an allocated state to an unallocated state, identifiers that indicate statuses of all the ASIDs and that are in the global bitmap, and modify identifiers in the reservation bitmap from a reserved state to an unreserved state, where the waterline indicates a maximum quantity of second ASIDs reserved for the second processor core.

Optionally, the third processing unit 405 is further configured to: obtain a context identifier of the process run by the second processor core; and if the context identifier of the process includes a non-isolation identifier, modify the non-isolation identifier into an isolation identifier, and modify, from an unreserved state to a reserved state, an identifier that is of an ASID included in the context identifier and that is in the reservation bitmap.

For the resource management apparatus described above, refer to corresponding content of the resource management method for understanding. Details are not described herein again.

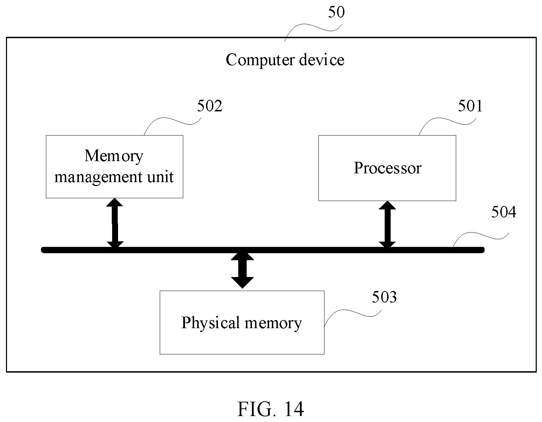

FIG. 14 is a schematic diagram of a possible logical structure of a computer device 50 according to an embodiment of this application. The computer device 50 includes a processor 501, a memory management unit 502, a physical memory 503, and a bus 504. The processor 501, the memory management unit 502, and the physical memory 503 are connected to each other through the bus 504. The processor 501 may include a plurality of processor cores. The plurality of processor cores may be divided into a common core and an isolated core by using an isolation technology. The common core is configured to run a process of a common service, and the isolated core is configured to run a process of an isolated service.

In this embodiment of this application, the processor 501 is configured to control and manage an action of the computer device 50. For example, the processor 501 is configured to perform the steps in the method embodiments in FIG. 1 to FIG. 12. The memory management unit 502 is configured to manage the physical memory. The physical memory 503 is configured to store program code and data of a dynamic library. Certainly, the computer device 50 provided in this embodiment of this application further includes other components such as a communication interface and a magnetic disk, which are not shown one by one in FIG. 14.

The processor 501 may be a central processing unit, a general-purpose processor, a digital signal processor, an application-specific integrated circuit, a field programmable gate array or another programmable logic device, a transistor logic device, a hardware component, or any combination thereof. The processor 501 may implement or execute various example logical blocks, modules, and circuits described with reference to content disclosed in this application. Alternatively, the processor 501 may be a combination implementing a computing function, for example, a combination of one or more microprocessors, or a combination of a digital signal processor and a microprocessor. The bus 504 may be a peripheral component interconnect (PCI) bus, an extended industry standard architecture (EISA) bus, or the like. Buses may be classified into an address bus, a data bus, a control bus, and the like. For ease of representation, only one bold line represents the bus in FIG. 14, but this does not mean that there is only one bus or only one type of bus.

In another embodiment of this application, a computer-readable storage medium is further provided. The computer-readable storage medium stores computer-executable instructions. When a processor of a device executes the computer-executable instructions, the device performs the foregoing steps performed by the computer system in FIG. 1 to FIG. 10.

In another embodiment of this application, a computer program product is further provided. The computer program product includes computer-executable instructions, and the computer-executable instructions are stored in a computer-readable storage medium. When a processor of a device executes the computer-executable instructions, the device performs the foregoing steps performed by the computer system in FIG. 1 to FIG. 12.

In another embodiment of this application, a chip system is further provided. The chip system includes a processor. The processor is configured to support a resource management apparatus in implementing the steps performed by the computer system in FIG. 1 to FIG. 12. In a possible design, the chip system may further include a memory. The memory is configured to store program instructions and data that are necessary for a data writing apparatus. The chip system may include a chip, or may include a chip and another discrete component.

A person of ordinary skill in the art may be aware that, in combination with examples described in embodiments disclosed in this specification, units and algorithm steps may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of embodiments of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate. Parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device, or the like) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of embodiments of this application, but are not intended to limit the protection scope of embodiments of this application.

## Claims

1. A resource management method, wherein the method is applied to a computer system, the computer system comprises a first processor core and a second processor core that is in an isolated environment, and the method comprises:
allocating (101) first ASIDs from an address space identifier ASID resource pool to processes run by the first processor core (401), wherein the ASID resource pool comprises a plurality of first ASIDs;
allocating (102) a second ASID to a process run by the second processor core (402); and
when the first ASIDs in the ASID resource pool are exhausted, updating (103) only the first ASIDs in the ASID resource pool in an ASID generation iteration manner, invalidating the first ASIDs allocated to the processes run by the first processor core, and refreshing a translation lookaside buffer TLB in the first processor core.

2. The method according to claim 1, wherein the allocating a second ASID to a process run by the second processor core (402) comprises:
allocating the second ASID from another ASID resource pool to the process run by the second processor core, wherein the another ASID resource pool comprises a plurality of second ASIDs.

3. The method according to claim 1, wherein the allocating a second ASID to a process run by the second processor core (402) comprises:
allocating the second ASID from the ASID resource pool to the process run by the second processor core, wherein the ASID resource pool comprises at least one second ASID; and
storing reservation information of the allocated second ASID, wherein the reservation information indicates that the allocated second ASID is reserved; and
correspondingly, the updating the first ASIDs in the ASID resource pool in an ASID generation iteration manner comprises:
determining the first ASIDs in the ASID resource pool based on the reservation information of the allocated second ASID, and updating the first ASIDs in the ASID generation iteration manner.

4. The method according to claim 3, wherein the storing reservation information of the allocated second ASID, wherein the reservation information indicates that the allocated second ASID is reserved comprises:
modifying, from an unreserved state to a reserved state in a reservation bitmap, an identifier in an identifier bit corresponding to the allocated second ASID, wherein the reservation bitmap is used to record a reservation status of each ASID in the ASID resource pool.

5. The method according to claim 4, wherein the determining the first ASIDs in the ASID resource pool based on the reservation information of the allocated second ASID, and updating the first ASIDs in the ASID generation iteration manner comprises:
determining, based on a global bitmap and the reserved state that is of the allocated second ASID and that is in the reservation bitmap, the first ASIDs on which generation iteration needs to be performed, wherein the global bitmap is used to record allocation statuses of ASIDs in the ASID resource pool; and
updating the first ASIDs in the ASID resource pool in the ASID generation iteration manner, and modifying, from an allocated state to an unallocated state, identifiers that are in the global bitmap and that indicate statuses of the first ASIDs.

6. The method according to claim 4 or 5, wherein the method further comprises:
when the ASID resource pool further comprises an unallocated ASID, and a quantity of second ASIDs allocated to processes run by the second processor core (402) exceeds a waterline, allocating a second ASID from the unallocated ASID to a process run by the second processor core, and modifying, from an unreserved state to a reserved state, an identifier bit that is of the second ASID allocated to the process run by the second processor core and that is in the reservation bitmap, wherein the waterline indicates a maximum quantity of second ASIDs reserved for the second processor core.

7. The method according to claim 5, wherein the method further comprises:
when the ASID resource pool does not comprise an unallocated ASID, and a quantity of second ASIDs allocated to processes run by the second processor core (402) exceeds a waterline, updating all the ASIDs in the ASID resource pool, modifying, from an allocated state to an unallocated state, identifiers that indicate statuses of all the ASIDs and that are in the global bitmap, and modifying identifiers in the reservation bitmap from a reserved state to an unreserved state, wherein the waterline indicates a maximum quantity of second ASIDs reserved for the second processor core.

8. The method according to any one of claims 4 to 7, wherein the method further comprises:
obtaining a context identifier of the process run by the second processor core (402); and
if the context identifier of the process comprises a non-isolation identifier, modifying the non-isolation identifier into an isolation identifier, and modifying, from an unreserved state to a reserved state, an identifier that is of an ASID comprised in the context identifier and that is in the reservation bitmap.

9. A resource management apparatus (40), comprising a first processor core (401) and a second processor core (402) that is in an isolated environment, wherein the apparatus further comprises:
a first processing unit (403), configured to allocate first ASIDs from an address space identifier ASID resource pool to processes run by the first processor core, wherein the ASID resource pool comprises a plurality of first ASIDs;
a second processing unit (404), configured to allocate a second ASID to a process run by the second processor core; and
a third processing unit (405), configured to: when the first ASIDs in the ASID resource pool are exhausted, update only the first ASIDs in the ASID resource pool in an ASID generation iteration manner, invalidate the first ASIDs allocated to the processes run by the first processor core, and refresh a translation lookaside buffer TLB in the first processor core.

10. The apparatus (40) according to claim 9, wherein
the second processing unit (404) is configured to allocate the second ASID from another ASID resource pool to the process run by the second processor core (402), wherein the another ASID resource pool comprises a plurality of second ASIDs.

11. The apparatus (40) according to claim 9, wherein
the second processing unit (404) is configured to: allocate the second ASID from the ASID resource pool to the process run by the second processor core (402), wherein the ASID resource pool comprises at least one second ASID; and store reservation information of the allocated second ASID, wherein the reservation information indicates that the allocated second ASID is reserved; and
the third processing unit (405) is configured to: determine the first ASIDs in the ASID resource pool based on the reservation information of the allocated second ASID, and update the first ASIDs in the ASID generation iteration manner.

12. A computing device (50), comprising one or more processors (501) and a computer-readable storage medium (503) storing a computer program, wherein
when the computer program is executed by the one or more processors, the method according to any one of claims 1 to 8 is implemented.

13. A chip system, comprising one or more processors, wherein the one or more processors are invoked to perform the method according to any one of claims 1 to 8.

14. A computer-readable storage medium (503), storing a computer program, wherein when the computer program is executed by one or more processors (501), the method according to any one of claims 1 to 8 is implemented.

15. A computer program product, comprising a computer program, wherein when executed by one or more processors, the computer program is used to implement the method according to any one of claims 1 to 8.

## Patentansprüche

1. Ressourcenverwaltungsverfahren, wobei das Verfahren auf ein Computersystem angewendet wird, das Computersystem einen ersten Prozessorkern und einen zweiten Prozessorkern, der sich in einer isolierten Umgebung befindet, umfasst und das Verfahren Folgendes umfasst:
Zuweisen (101) erster ASID aus einem Adressraumkennungs(ASID)-Ressourcenpool zu durch den ersten Prozessorkern (401) ausgeführten Prozessen, wobei der ASID-Ressourcenpool eine Vielzahl von ersten ASID umfasst;
Zuweisen (102) einer zweiten ASID zu einem durch den zweiten Prozessorkern (402) ausgeführten Prozess; und
wenn die ersten ASID im ASID-Ressourcenpool erschöpft sind, Aktualisieren (103) nur der ersten ASID im ASID-Ressourcenpool auf eine ASID-Generierungsiterationsweise, Ungültigmachen der ersten ASID, die den durch den ersten Prozessorkern ausgeführten Prozessen zugewiesen sind, und Aktualisieren eines Translation Lookaside Buffer (TLB) im ersten Prozessorkern.

2. Verfahren nach Anspruch 1, wobei das Zuweisen einer zweiten ASID zu einem durch den zweiten Prozessorkern (402) ausgeführten Prozess Folgendes umfasst:
Zuweisen der zweiten ASID aus einem anderen ASID-Ressourcenpool zu dem durch den zweiten Prozessorkern ausgeführten Prozess, wobei der andere ASID-Ressourcenpool eine Vielzahl von zweiten ASID umfasst.

3. Verfahren nach Anspruch 1, wobei das Zuweisen einer zweiten ASID zu einem durch den zweiten Prozessorkern (402) ausgeführten Prozess Folgendes umfasst:
Zuweisen der zweiten ASID aus dem ASID-Ressourcenpool zu dem durch den zweiten Prozessorkern ausgeführten Prozess, wobei der ASID-Ressourcenpool mindestens eine zweite ASID umfasst; und
Speichern von Reservierungsinformationen der zugewiesenen zweiten ASID, wobei die Reservierungsinformationen angeben, dass die zugewiesene zweite ASID reserviert ist; und
wobei dementsprechend das Aktualisieren der ersten ASID im ASID-Ressourcenpool auf eine ASID-Generierungsiterationsweise Folgendes umfasst:
Bestimmen der ersten ASID im ASID-Ressourcenpool basierend auf den Reservierungsinformationen der zugewiesenen zweiten ASID und Aktualisieren der ersten ASID auf die ASID-Generierungsiterationsweise.

4. Verfahren nach Anspruch 3, wobei das Speichern von Reservierungsinformationen der zugewiesenen zweiten ASID, wobei die Reservierungsinformationen angeben, dass die zugewiesene zweite ASID reserviert ist, Folgendes umfasst:
Ändern einer Kennung in einem Kennungsbit, das der zugewiesenen zweiten ASID entspricht, von einem nicht reservierten Zustand in einen reservierten Zustand in einer Reservierungs-Bitmap, wobei die Reservierungs-Bitmap verwendet wird, um einen Reservierungsstatus jeder ASID im ASID-Ressourcenpool aufzuzeichnen.

5. Verfahren nach Anspruch 4, wobei das Bestimmen der ersten ASID im ASID-Ressourcenpool basierend auf den Reservierungsinformationen der zugewiesenen zweiten ASID und das Aktualisieren der ersten ASID in der ASID-Generierungsiterationsweise Folgendes umfasst:
Bestimmen der ersten ASID, bei denen eine Generierungsiteration durchgeführt werden muss, basierend auf einer globalen Bitmap und dem reservierten Zustand, der zu der zugewiesenen zweiten ASID gehört und sich in der Reservierungs-Bitmap befindet, wobei die globale Bitmap verwendet wird, um die Zuweisungsstatus von ASID im ASID-Ressourcenpool aufzuzeichnen; und
Aktualisieren der ersten ASID im ASID-Ressourcenpool auf die ASID-Generierungsiterationsweise und Ändern von Kennungen, die sich in der globalen Bitmap befinden und die Status der ersten ASID angeben, von einem zugewiesenen in einen nicht zugewiesenen Zustand.

6. Verfahren nach Anspruch 4 oder 5, wobei das Verfahren ferner Folgendes umfasst:
wenn der ASID-Ressourcenpool ferner eine nicht zugewiesene ASID umfasst und eine Menge von zweiten ASID, die durch den zweiten Prozessorkern (402) ausgeführten Prozessen zugewiesen ist, eine Wasserlinie überschreitet, Zuweisen einer zweiten ASID aus der nicht zugewiesenen ASID zu einem durch den zweiten Prozessorkern ausgeführten Prozess und Ändern eines Kennungsbits, das zu der zweiten ASID gehört, die dem durch den zweiten Prozessorkern ausgeführten Prozess zugewiesen ist und sich in der Reservierungs-Bitmap befindet, von einem nicht reservierten Zustand in einen reservierten Zustand, wobei die Wasserlinie eine maximale Menge von zweiten ASID angibt, die für den zweiten Prozessorkern reserviert ist.

7. Verfahren nach Anspruch 5, wobei das Verfahren ferner Folgendes umfasst:
wenn der ASID-Ressourcenpool keine nicht zugewiesene ASID umfasst und eine Menge von zweiten ASID, die durch den zweiten Prozessorkern (402) ausgeführten Prozessen zugewiesen ist, eine Wasserlinie überschreitet, Aktualisieren aller ASID im ASID-Ressourcenpool, Ändern von Kennungen, die Status aller ASID angeben und sich in der globalen Bitmap befinden, von einem zugewiesenen Zustand in einen nicht zugewiesenen Zustand und Ändern von Kennungen in der Reservierungs-Bitmap von einem reservierten Zustand in einen nicht reservierten Zustand, wobei die Wasserlinie eine maximale Menge von zweiten ASID angibt, die für den zweiten Prozessorkern reserviert ist.

8. Verfahren nach einem der Ansprüche 4 bis 7, wobei das Verfahren ferner Folgendes umfasst:
Erlangen einer Kontextkennung des durch den zweiten Prozessorkern (402) ausgeführten Prozesses; und
wenn die Kontextkennung des Prozesses eine Nichtisolationskennung umfasst, Ändern der Nichtisolationskennung in eine Isolationskennung und Ändern einer Kennung, die zu einer in der Kontextkennung enthaltenen ASID gehört und sich in der Reservierungs-Bitmap befindet, von einem nicht reservierten Zustand in einen reservierten Zustand.

9. Ressourcenverwaltungsvorrichtung (40), umfassend einen ersten Prozessorkern (401) und einen zweiten Prozessorkern (402), der sich in einer isolierten Umgebung befindet, wobei die Vorrichtung ferner Folgendes umfasst:
eine erste Verarbeitungseinheit (403), die dazu konfiguriert ist, erste ASID aus einem Adressraumkennungs(ASID)-Ressourcenpool zu durch den ersten Prozessorkern ausgeführten Prozessen zuzuweisen, wobei der ASID-Ressourcenpool eine Vielzahl von ersten ASID umfasst;
eine zweite Verarbeitungseinheit (404), die dazu konfiguriert ist, eine zweite ASID zu einem durch den zweiten Prozessorkern ausgeführten Prozess zuzuweisen; und
eine dritte Verarbeitungseinheit (405), die zu Folgendem konfiguriert ist: wenn die ersten ASID im ASID-Ressourcenpool erschöpft sind, Aktualisieren nur der ersten ASID im ASID-Ressourcenpool auf eine ASID-Generierungsiterationsweise, Ungültigmachen der ersten ASID, die den durch den ersten Prozessorkern ausgeführten Prozessen zugewiesen sind, und Aktualisieren eines Translation Lookaside Buffer (TLB) im ersten Prozessorkern.

10. Vorrichtung (40) nach Anspruch 9, wobei
die zweite Verarbeitungseinheit (404) dazu konfiguriert ist, die zweite ASID aus einem anderen ASID-Ressourcenpool zu dem durch den zweiten Prozessorkern (402) ausgeführten Prozess zuzuweisen, wobei der andere ASID-Ressourcenpool eine Vielzahl von zweiten ASID umfasst.

11. Vorrichtung (40) nach Anspruch 9, wobei
die zweite Verarbeitungseinheit (404) zu Folgendem konfiguriert ist: Zuweisen der zweiten ASID aus dem ASID-Ressourcenpool zu dem durch den zweiten Prozessorkern (402) ausgeführten Prozess, wobei der ASID-Ressourcenpool mindestens eine zweite ASID umfasst; und Speichern von Reservierungsinformationen der zugewiesenen zweiten ASID, wobei die Reservierungsinformationen angeben, dass die zugewiesene zweite ASID reserviert ist; und die dritte Verarbeitungseinheit (405) zu Folgendem konfiguriert ist: Bestimmen der ersten ASID im ASID-Ressourcenpool basierend auf den Reservierungsinformationen der zugewiesenen zweiten ASID und Aktualisieren der ersten ASID auf die ASID-Generierungsiterationsweise.

12. Rechenvorrichtung (50), umfassend einen oder mehrere Prozessoren (501) und ein computerlesbares Speichermedium (503), das ein Computerprogramm speichert, wobei
bei Ausführung des Computerprogramms durch den einen oder die mehreren Prozessoren das Verfahren nach einem der Ansprüche 1 bis 8 umgesetzt wird.

13. Chipsystem, umfassend einen oder mehrere Prozessoren, wobei der eine oder die mehreren Prozessoren dazu aufgerufen werden, das Verfahren nach einem der Ansprüche 1 bis 8 durchzuführen.

14. Computerlesbares Speichermedium (503), das ein Computerprogramm speichert, wobei bei Ausführung des Computerprogramms durch einen oder mehrere Prozessoren (501) das Verfahren nach einem der Ansprüche 1 bis 8 umgesetzt wird.

15. Computerprogrammprodukt, umfassend ein Computerprogramm, wobei das Computerprogramm bei Ausführung durch einen oder mehrere Prozessoren dazu verwendet wird, das Verfahren nach einem der Ansprüche 1 bis 8 umzusetzen.

## Revendications

1. Procédé de gestion de ressources, dans lequel le procédé est appliqué à un système informatique, le système informatique comprend un premier cœur de processeur et un second cœur de processeur qui se trouve dans un environnement isolé, et le procédé comprend :
l'attribution (101) de premiers ASID à partir d'un pool de ressources ASID d'identifiant d'espace d'adressage à des processus exécutés par le premier cœur de processeur (401), dans lequel le pool de ressources ASID comprend une pluralité de premiers ASID ;
l'attribution (102) d'un second ASID à un processus exécuté par le second cœur de processeur (402) ; et
lorsque les premiers ASID dans le pool de ressources ASID sont épuisés, la mise à jour (103) uniquement des premiers ASID dans le pool de ressources ASID d'une manière itérative de génération ASID, l'invalidation des premiers ASID alloués aux processus exécutés par le premier cœur de processeur, et l'actualisation d'un tampon de traduction TLB dans le premier cœur de processeur.

2. Procédé selon la revendication 1, dans lequel l'attribution d'un second ASID à un processus exécuté par le second cœur de processeur (402) comprend :
l'attribution du second ASID d'un autre pool de ressources ASID au processus exécuté par le deuxième cœur de processeur, dans lequel l'autre pool de ressources ASID comprend une pluralité de seconds ASID.

3. Procédé selon la revendication 1, dans lequel l'attribution d'un second ASID à un processus exécuté par le second cœur de processeur (402) comprend :
l'attribution du second ASID du pool de ressources ASID au processus exécuté par le second cœur de processeur, dans lequel le pool de ressources ASID comprend au moins un second ASID ; et
le stockage d'informations de réservation du second ASID alloué, dans lequel les informations de réservation indiquent que le second ASID alloué est réservé ; et
en conséquence, la mise à jour des premiers ASID dans le pool de ressources ASID d'une manière itérative de génération ASID comprend :
la détermination des premiers ASID dans le pool de ressources ASID sur la base des informations de réservation du second ASID alloué, et la mise à jour des premiers ASID de manière itérative de génération ASID.

4. Procédé selon la revendication 3, dans lequel les informations de réservation de stockage du second ASID alloué, dans lesquelles les informations de réservation indiquent que le second ASID alloué est réservé, comprennent :
la modification, depuis un état non réservé jusqu'à un état réservé dans une bitmap de réservation, d'un identifiant dans un bit d'identifiant correspondant au second ASID alloué, dans lequel la bitmap de réservation est utilisée pour enregistrer un état de réservation de chaque ASID dans le pool de ressources ASID.

5. Procédé selon la revendication 4, dans lequel la détermination des premiers ASID dans le pool de ressources ASID sur la base des informations de réservation du second ASID alloué, et la mise à jour des premiers ASID de manière itérative de génération ASID comprend :
la détermination, sur la base d'une bitmap globale et de l'état réservé qui est celui du second ASID alloué et qui est dans la bitmap de réservation, des premiers ASID sur lesquels une itération de génération doit être effectuée, dans lequel la bitmap globale est utilisée pour enregistrer les états d'attribution des ASID dans le pool de ressources ASID ; et
la mise à jour des premiers ASID dans le pool de ressources ASID de la manière itérative de génération ASID, et la modification, depuis un état alloué jusqu'à un état non alloué, des identifiants qui se trouvent dans la bitmap globale et qui indiquent les statuts des premiers ASID.

6. Procédé selon la revendication 4 ou 5, dans lequel le procédé comprend également :
lorsque le pool de ressources ASID comprend également un ASID non alloué, et qu'une quantité de seconds ASID alloués à des processus exécutés par le second cœur de processeur (402) dépasse une ligne de flottaison, l'attribution d'un second ASID à partir de l'ASID non alloué jusqu'à un processus exécuté par le second cœur de processeur, et la modification, d'un état non réservé à un état réservé, d'un bit d'identification qui est du second ASID alloué au processus exécuté par le second cœur de processeur et qui est dans la bitmap de réservation, dans lequel la ligne de flottaison indique une quantité maximale de seconds ASID réservés pour le second cœur de processeur.

7. Procédé selon la revendication 5, dans lequel le procédé comprend également :
lorsque le pool de ressources ASID ne comprend pas d'ASID non alloué, et qu'une quantité de seconds ASID alloués à des processus exécutés par le second cœur de processeur (402) dépasse une ligne de flottaison, la mise à jour de tous les ASID dans le pool de ressources ASID, la modification, d'un état alloué à un état non alloué, d'identifiants qui indiquent des statuts de tous les ASID et qui sont dans la bitmap globale, et la modification d'identifiants dans la bitmap de réservation d'un état réservé à un état non réservé, dans lequel la ligne de flottaison indique une quantité maximale de seconds ASID réservés pour le second cœur de processeur.

8. Procédé selon l'une quelconque des revendications 4 à 7 dans lequel le procédé comprend également :
l'obtention d'un identifiant de contexte du processus exécuté par le second cœur de processeur (402) ; et
si l'identifiant de contexte du processus comprend un identifiant de non-isolement, la modification de l'identifiant de non-isolement en un identifiant d'isolement, et la modification, d'un état non réservé à un état réservé, d'un identifiant qui est d'un ASID compris dans l'identifiant de contexte et qui est dans la bitmap de réservation.

9. Appareil de gestion de ressources (40), comprenant un premier cœur de processeur (401) et un second cœur de processeur (402) qui se trouve dans un environnement isolé, dans lequel l'appareil comprend également :
une première unité de traitement (403), configuré pour attribuer des premiers ASID à partir d'un pool de ressources ASID d'identifiant d'espace d'adressage à des processus exécutés par le premier cœur de processeur, dans lequel le pool de ressources ASID comprend une pluralité de premiers ASID ;
une deuxième unité de traitement (404), configurée pour attribuer un second ASID à un processus exécuté par le second cœur de processeur ; et
une troisième unité de traitement (405), configurée pour :
lorsque les premiers ASID dans le pool de ressources ASID sont épuisés, mettre à jour uniquement les premiers ASID dans le pool de ressources ASID d'une manière itérative de génération ASID, invalider les premiers ASID alloués aux processus exécutés par le premier cœur de processeur, et actualiser un tampon de traduction TLB dans le premier cœur de processeur.

10. Appareil (40) selon la revendication 9, dans lequel la deuxième unité de traitement (404) est configurée pour attribuer le second ASID d'un autre pool de ressources ASID au processus exécuté par le second cœur de processeur (402), dans lequel l'autre pool de ressources ASID comprend une pluralité de seconds ASID.

11. Appareil (40) selon la revendication 9, dans lequel la deuxième unité de traitement (404) est configurée pour :
attribuer le second ASID du pool de ressources ASID au processus exécuté par le second cœur de processeur (402), dans lequel le pool de ressources ASID comprend au moins un second ASID ; et
stocker des informations de réservation du second ASID alloué, dans lequel les informations de réservation indiquent que le second ASID alloué est réservé ; et
la troisième unité de traitement (405) est configurée pour :
déterminer les premiers ASID dans le pool de ressources ASID sur la base des informations de réservation du second ASID alloué, et mettre à jour les premiers ASID de manière itérative de génération ASID.

12. Dispositif informatique (50), comprenant un ou plusieurs processeurs (501) et un support de stockage lisible par ordinateur (503) stockant un programme informatique, dans lequel lorsque le programme informatique est exécuté par les un ou plusieurs processeurs, le procédé selon l'une quelconque des revendications 1 à 8 est mis en œuvre.

13. Système de puce, comprenant un ou plusieurs processeurs, dans lequel les un ou plusieurs processeurs sont appelés à exécuter le procédé selon l'une quelconque des revendications 1 à 8.

14. Support de stockage lisible par ordinateur (503), stockant un programme informatique, dans lequel, lorsque le programme est exécuté par les un ou plusieurs processeurs (501), le procédé selon l'une quelconque des revendications 1 à 8 est mis en œuvre.

15. Produit de programme informatique, comprenant un programme informatique, dans lequel, lorsqu'il est exécuté par les un ou plusieurs ordinateurs, le programme informatique est utilisé pour mettre en œuvre le procédé selon l'une quelconque des revendications 1 à 8.
